# EUROPEAN PATENT APPLICATION

(11) **EP 2 187 686 A1**
(43) Date of publication of application: **19.05.2010**
(21) Application number: 09722084.2
(22) Date of filing: 28.01.2009
(51) Int. Cl.: H04W 28/08, H04W 8/04, H04W 12/06, H04W 80/04

(54) **LOAD DISTRIBUTION SYSTEM, LOAD DISTRIBUTION METHOD, AND AUTHENTICATION SERVER**

(30) Priority: 18.03.2008 JP 2008068787
(71) Applicant: Nec Corporation, Tokyo 108-8001 (JP)
(72) Inventor: SEJIMO, Masaki, Tokyo 108-8001 (JP)
(74) Representative: Glawe, Delfs, Moll
(86) International application number: PCT/JP2009/051375
(87) International publication number: WO 2009/116321

(57) **Abstract**

The present invention provides a load distribution system and a load distribution method that are capable of selecting an appropriate server in consideration of a load condition of a server and characteristic of a mobile node. Provided is a load distribution system 1 in a communication network that includes a mobile node 2, a plurality of home agent servers 90 that manage positional information of the mobile node 2, and an authentication server 4 that performs access authentication of the mobile node 2. The authentication server 4 includes a characteristic information database 6 where user characteristic of the mobile node 2 is stored and a load information database 7 where a load condition of each of home agent servers (3a to 3c) is stored, and the authentication server 4 selects a home agent server 90 that is allocated to the mobile node 2 based on the user characteristic of the mobile node 2 and the load condition of each of the home agent servers (3a to 3c) upon receiving an access authentication request of the mobile node 2.

## Description

### Technical Field

The present invention relates to a load distribution system, a load distribution method, and an authentication server, and more specifically, to a load distribution system, a load distribution method, and an authentication server using a mobile IP.

### Background Art

In recent years, a technique has been suggested that enables to perform continuous communication by the same IP address even when a user terminal moves between networks in an environment where a plurality of networks are interconnected. In a Mobile IP (Internet Protocol), a communication relay device called a home agent (HA) server is arranged between a mobile node (MN) which is a user terminal and a correspondent node (CN). As the HA server performs the processing such as location management and data transfer of the MN, packet transferring to the terminal which has moved is made possible even when the user terminal moves between networks.

In such a communication system using the Mobile IP, communication traffic increases as the number of MNs contained in the HA server increases. Accordingly, the load of the processing performed by the HA server becomes high, which affects communication performance between terminals. As related arts to avoid or relieve such a high load, such systems have been known as an HA server load distribution system by a redirect method and an HA server load distribution system by a load balancer method (a non-patent document 1 and a non-patent document 2, for example).

According to the HA server load distribution system by the redirect method, when the HA server which is in the high-load condition receives an allocation request, the HA server rejects the allocation request which is received and reports an IP address of another HA server as a response to the allocation request. As such, another HA performs the processing instead of the HA server which is in the high-load condition to realize the load distribution.

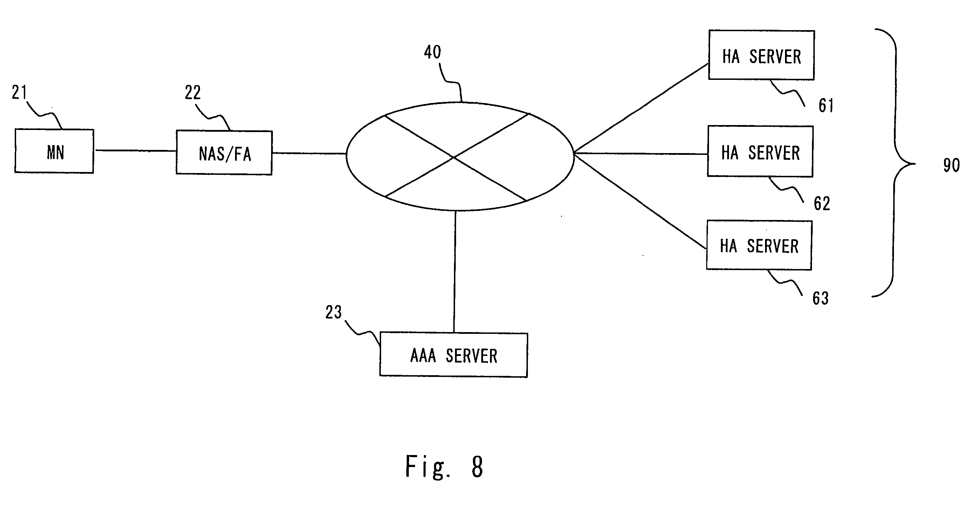

Fig. 8 is a configuration diagram showing a load distribution system of an HA server according to a redirect method. As shown in Fig. 8, an HA server load distribution system according to the redirect method includes an MN (Mobile Node) 21 which is a movable user terminal, an AAA (Authentication, Authorization and Accounting) server 23 which is an authentication server, a NAS (Network Access server) 22 that mediates authentication processing between the MN 21 and the AAA server 23, an FA (Foreign Agent) 22 that aids the detection of movement of the MN 21 and provides a route control service, and a plurality of HA servers 90. Now, the AAA server 23 holds an IP address of each of the HA servers (61 to 63). Further, each of the HA servers (61 to 63) holds IP addresses of other HA servers.

Now, connection setup processing executed in the Mobile IP system will be described prior to the description of the operation of the load distribution system according to the redirect method. The connection setup processing includes access authentication and signaling processing, and is executed prior to the start of data communication processing by the MN 21. The access authentication means authentication processing executed by a provider that provides the Mobile IP system using the AAA server 23 regarding whether the MN 21 is an authorized user who made a contract of the Internet access and the mobility service. The access authentication is realized by the NAS mediating the exchange of messages regarding the authentication processing between the MN 21 and the AAA server 23. Further, the signaling processing is the processing that is executed to update the location management information database of the MN 21 which is held by the HA server 90, and includes processing of exchanging an RRQ (Registration Request) message and an RRP (Registration Reply) message executed between the MN 21 or the FA 22 and the HA server 90 and processing of updating the location management database of the MN 21 held by the HA server 90 called BC (Binding Cache). The access authentication is firstly executed, and the signaling processing is executed next.

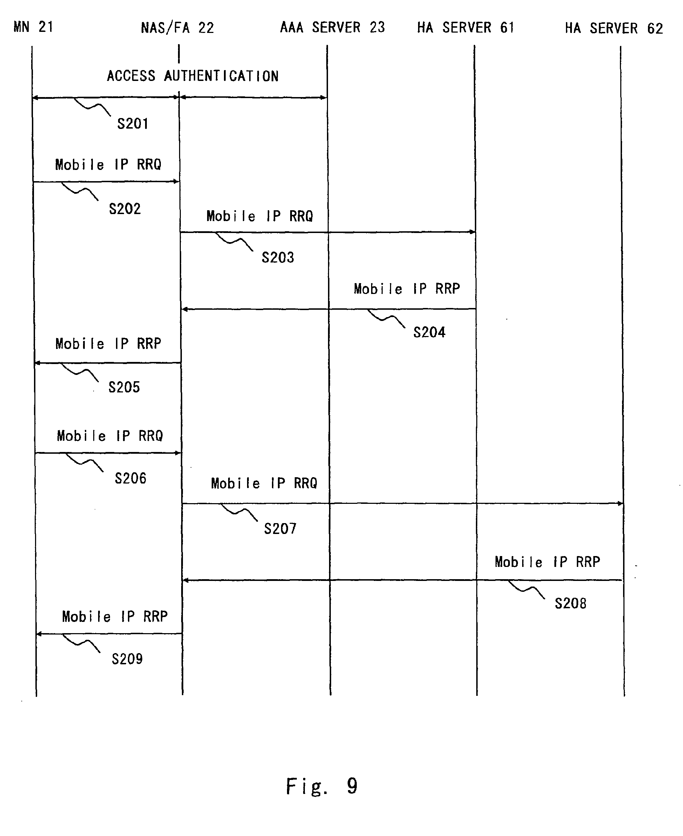

Referring to a sequence diagram of Fig. 9, the operation of the load distribution system according to the redirect method will be described. First, the access authentication processing is executed among the MN 21, the NAS 22, and the AAA server 23 (S201). At the time of the access authentication, the AAA server 23 selects any HA server 90 from an IP address of each HA server 90 that is held by itself according to a round robin algorithm, and allocates the IP address of the selected HA server 90 to the MN 21.

Upon completion of the access authentication, the signaling processing is executed. According to the redirect method, the load distribution processing is performed in performing the signaling processing. First, the MN 21 transmits an RRQ (Registration Request) message in which the information indicating an HA server allocation request is stored to the HA server 61 reported from the AAA server 23 (S202, 203). At this time, the FA 22 receives the RRQ message by proxy, and transfers it to the HA server 61. Then, upon receiving the RRQ message, the HA server 61 refuses the HA server allocation request when the load condition is high, and stores the information indicating the refusal of the HA server allocation request and an IP address of an HA server which will be a proxy of itself in the RRP (Registration Reply) message to transmit it to the FA 22 (S204). Upon receiving the RRP message, the FA 22 further transfers it to the MN 21 (S205). The MN 21 receiving the RRP message refers to the information indicating the refusal of the allocation request included therein to recognize that the HA server 61 is in the high-load condition and acquire the IP address of the server 62 which is the proxy.

The MN 21 transmits the RRQ (Registration Request) message to which the information indicating the HA server allocation request is added to the proxy HA server 62 (S206, 207). At this time, the FA 22 receives the RRQ message by proxy and transfers it to the HA server 62. Upon receiving the RRQ message, the proxy HA server 62 receives the HA server allocation request and transmits the RRP (Registration Reply) message in which the information indicating the reception of the HA server allocation request is stored to the FA 22 when the load condition of itself is low (S208). Receiving the RRP message, the FA 22 further transfers it to the MN 21 (S209). By receiving the RRP message by the MN 21, the load distribution processing is completed. When the load condition of the proxy HA server 62 is high, the MN 21 transmits the HA server allocation request to one of the other HA servers 90 again.

Next, description will be made on the HA server load distribution system using a load balancer (LB) which is a load distribution relay device. In this load distribution system, the LB is further introduced in addition to the plurality of HA servers. When the LB receives the HA server allocation request, the LB selects a server from the plurality of HA servers in consideration of the load distribution and allocates the selected HA server to the MN, so as to realize the load distribution. The information that is reported from the HA server to the LB is used as the information used to judge the load condition of the HA server by the LB using a unique protocol which has not been standardized.

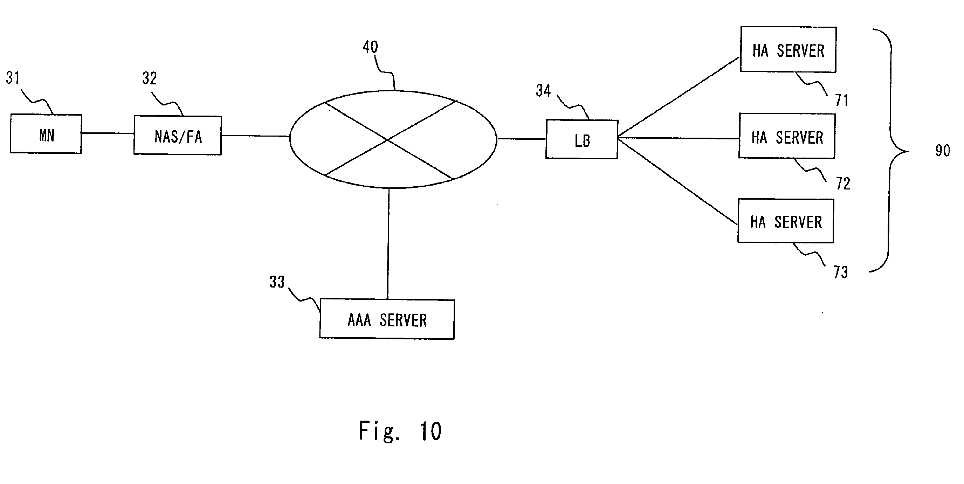

Fig. 10 is a configuration diagram showing a load distribution system of an HA server according to a load balancer method. As shown in Fig. 10, an HA server load distribution system according to a related load balancer method includes an MN (Mobile Node) 31 which is a movable user terminal, an AAA (Authentication, Authorization and Accounting) server 33 which is an authentication server, a NAS (Network Access server) 32 that mediates the authentication processing between the MN 31 and the AAA server 33, an FA (Foreign Agent) 32 that aids the detection of movement of the MN 31 and provides a route control service, an LB 34 which is a load balancer, and a plurality of HA servers 90. Now, the AAA server 33 holds an IP address of the LB 34, and the LB 34 holds an IP address of each of the HA servers (71 to 73). A load distribution system of the HA server according to the load balancer method shown in Fig. 10 is different from the HA server load distribution system according to the redirect method shown in Fig. 8 in that the LB 34 is employed.

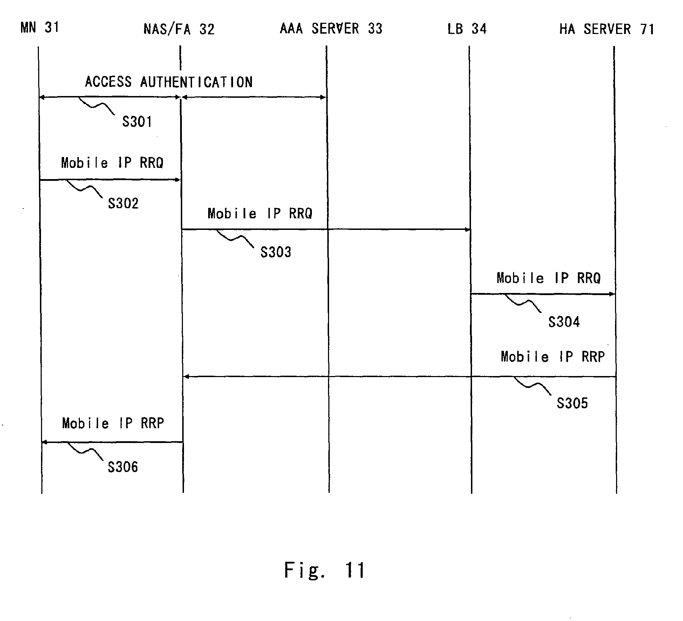

Referring to a sequence diagram of Fig. 11, the operation of the load distribution system according to the load balancer method will be described. First, the access authentication processing is executed among the MN 31, the NAS 32, and the AAA server 33 (S301). At the time of the access authentication, the AAA server 33 allocates the IP address of the LB 34 that is held by itself to the MN 31.

Upon completion of the access authentication, the signaling processing is executed. The MN 31 transmits an RRQ (Registration Request) message in which the information indicating the HA server allocation request is stored to the LB 34 reported from the AAA server 33 (S302, 303). At this time, when the FA 32 receives the RRQ message by proxy, the FA 32 transfers it to the LB 34. Upon receiving the RRQ message in which the information indicating the HA server allocation request is stored, the LB 71 selects the HA server 90 in consideration of the load condition, and transfers the RRQ message to the HA server 90 which is selected (S304).

Upon receiving the RRQ message, the HA server 71 selected by the LB 34 stores its own IP address in an RRP (Registration Reply) message to transmit the RRP message to the FA 32 (S305). Receiving the RRP message, the FA 32 transfers it to the MN 31. Then, receiving the RRP message, the MN 31 acquires the IP address of the HA server 71 included in the RRP message and performs the following communication using this HA server 71.
[Non-patent Document 1] Request for Comments: 4433, Mobile IPv4 Dynamic Home Agent (HA) Assignment, 2007.
[Non-patent Document 2] CISCO SYSTEMS, "CISCO HOME AGENT REDUNDANCY AND LOAD BALANCING", http://www.cisco.com/en/US/products/ps5940/products_white_paper0900aecd802921f0.shtml, 2007.

### Disclosure of Invention

### Technical Problem

However, the load distribution system of the HA server according to the redirect method increases delay time in performing the signaling processing. More specifically, the redirect processing occurs when the load of the HA server allocated to the MN is high in the load distribution system of the HA according to the redirect method, which increases delay time in performing the signaling processing. This problem is due to a fact that the allocation in consideration of the load condition is not performed in allocating the HA server.

Further, the load distribution system of the HA server according to the load balancer method also has problems as follows. The first problem is that, as the load balancer performs the selection processing of the HA server in the load distribution system of the HA server according to the load balancer method, the load balancer needs to be introduced and this produces the cost of arrangement and management of the load balancer. The second problem is that, delay time is produced due to the proxy reception and the transfer processing as the load balancer receives the RRQ message transmitted by the MN by proxy to perform the processing of transferring the RRQ message to the HA server. Further, the third problem is that a larger number of MNs that may perform large volume of data communication may be allocated to the same HA server as the load distribution system of the HA server according to the load balancer method does not consider the user characteristic of the MN. As such, the high load is produced in the HA server when the large number of MNs concurrently perform large volume of data communication, which significantly degrades the communication performance of the MN contained in the HA server.

One object of the present invention is to solve the above-described problems, and to provide a load distribution system, a load distribution method, and an authentication server that are capable of selecting an appropriate server in consideration of the load condition of a server and characteristics of the mobile node.

### Technical Solution

One aspect of the present invention is a load distribution system in a communication network that includes a mobile node, a plurality of servers that are connected to the mobile node, and an authentication server that performs access authentication of the mobile node, in which the authentication server includes a characteristic information database where user characteristic of the mobile node is stored and a load information database where a load condition of each of the servers is stored, and the authentication server selects one of the servers that is allocated to the mobile node based on the user characteristic of the mobile node and the load condition of each of the servers upon receiving an access authentication request of the mobile node.

Another aspect of the present invention is a load distribution method, in which an authentication server selects an allocating server that is allocated to a mobile node based on user characteristic of the mobile node and a load condition of the allocating server upon receiving an access authentication request of the mobile node.

A further aspect of the present invention is an authentication server that includes a characteristic information database in which user characteristic of a mobile node is stored, and a load information database in which a load condition of each of servers connected to the mobile node is stored, the authentication server selecting a server that is allocated to the mobile node based on the user characteristic of the mobile node and the load condition of each of the servers upon receiving an access authentication request of the mobile node.

### Advantageous Effects

According to the present invention, it is possible to provide a load distribution system, a load distribution method, and an authentication server that are capable of selecting an appropriate server in consideration of characteristics of the mobile node and the load condition of the server.

### Brief Description of Drawings

[Fig. 1] A diagram showing a schematic configuration example of a load distribution system according to a first embodiment.
[Fig. 2] A diagram showing a configuration example of the load distribution system according to the first embodiment.
[Fig. 3] A sequence diagram showing an operation example of the load distribution system according to the first embodiment.
[Fig. 4] A diagram showing a system configuration example of the load distribution system according to the first embodiment.
[Fig. 5] A flow chart showing an operation example of HA server selection processing by an HA server selection mechanism according to the first embodiment.
[Fig. 6] A diagram showing one example of a characteristic information database according to the first embodiment.
[Fig. 7] A diagram showing one example of a load information database according to the first embodiment.
[Fig. 8] A diagram showing a configuration example of a load distribution system according to a redirect method.
[Fig. 9] A sequence diagram showing an operation example of the load distribution system according to the redirect method.
[Fig. 10] A diagram showing a configuration example of a load distribution system using a load balancer.
[Fig. 11] A sequence diagram showing an operation example of the load distribution system using the load balancer.

### Explanation of Reference

- 1: LOAD DISTRIBUTION SYSTEM
- 2: MN
- 3: HA SERVER
- 4: AAA SERVER
- 5: NETWORK
- 6: CHARACTERISTIC INFORMATION DATABASE
- 7: LOAD INFORMATION DATABASE
- 11,21,31: MN
- 12, 22, 32: NAS/FA
- 13, 23, 33: AAA SERVER
- 34: LB
- 40: NETWORK
- 90: HA SERVER

### Best Mode for Carrying Out the Invention

Hereinafter, preferred embodiments of the present invention will be described in detail with reference to the drawings. The following description and drawings are partially omitted and simplified as appropriate for the sake of clarity. The components and parts having the same configuration or function throughout the drawings are denoted by the same reference symbols, and the description will be omitted.

### First Embodiment

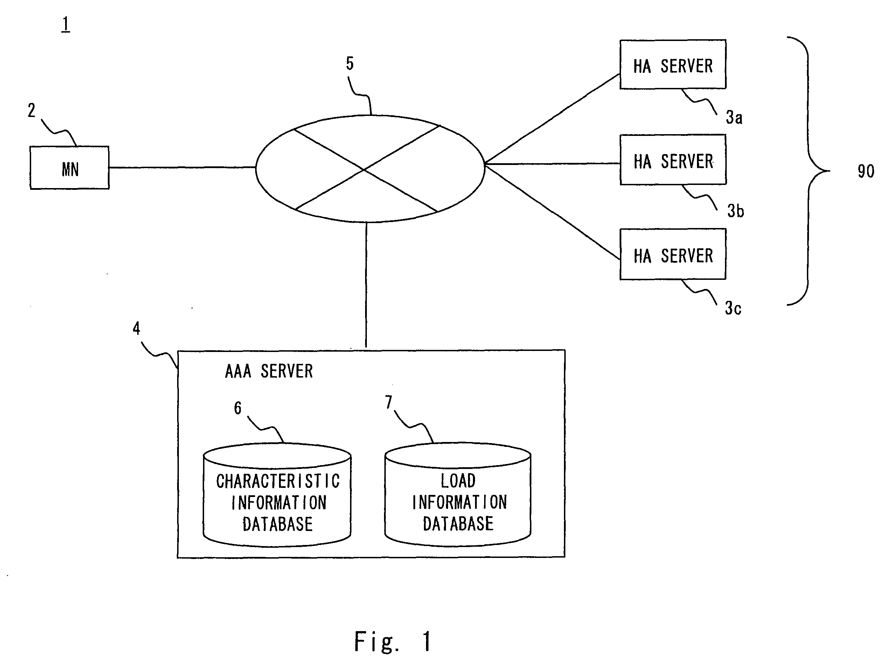

The preferred embodiment of the present invention will be described in detail with reference to the drawings. Fig. 1 is a diagram showing an example of the schematic configuration of a load distribution system according to the first embodiment. A load distribution system 1 is formed of a communication network 5 including a mobile node (MN) 2, a plurality of home agent (HA) servers 90 that manage location information of the MN 2, an authentication server (AAA: Authentication, Authorization and Accounting) 4 that performs access authentication of the MN 2. The AAA server 4 includes a characteristic information database 6 that stores user characteristic of the MN 2, and a load information database 7 that stores load condition of each of the HA servers (3a and 3b). The AAA server 4 performs selection processing of the HA server 90 which is to be allocated to the MN 2 based on the user characteristic of the MN 2 and the load condition of each of the HA servers (3a and 3b) upon receiving the access authentication request of the MN 2.

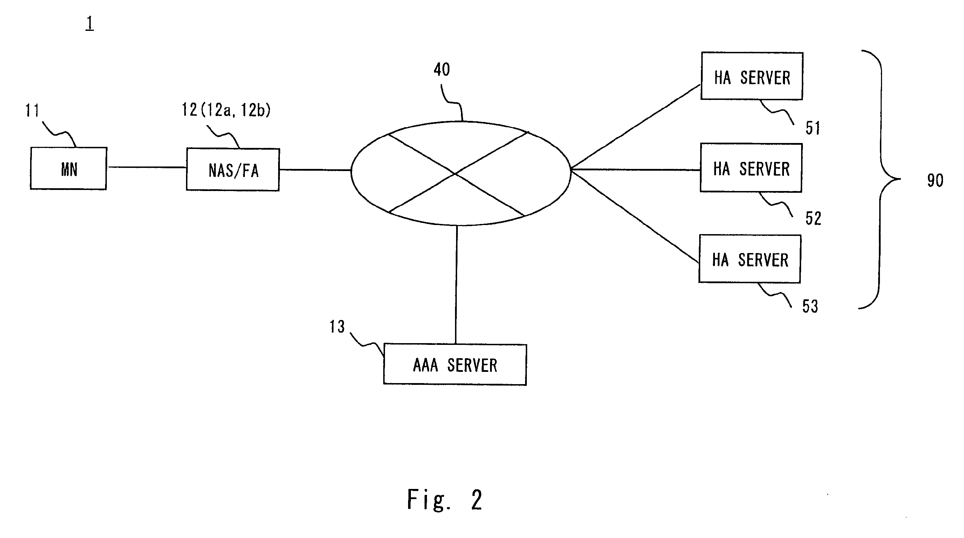

Referring now to Figs. 2 to 7, the load distribution system according to the first embodiment will be described in detail. Fig. 2 is a block diagram showing one configuration example of the load distribution system according to the first embodiment. As shown in Fig. 2, the load distribution system 1 according to the first embodiment includes an MN 11 which is a movable user terminal, an AAA server 13 that performs access authentication of the MN 11 through the Internet 40, a NAS (Network Access Server) 12a that mediates authentication processing between the MN 11 and the AAA server 13, an FA (Foreign Agent) 12b that assists detection of movement of the MN 11 and provides a route control service, and a plurality of HA servers 90 that manage location information of the MN 11. The distribution system 1 is a mobile IP system that includes these elements. Further, the AAA server 13 holds each IP address of each of the HA servers (51 to 53) in advance. Note that the configuration of the load distribution system 1 according to the first embodiment is substantially the same as that of the load distribution system according to the redirect method as shown in Fig. 8, and is different from the configuration of the load distribution system according to the load balancer method shown in Fig. 10 in that there is no need to introduce the LB.

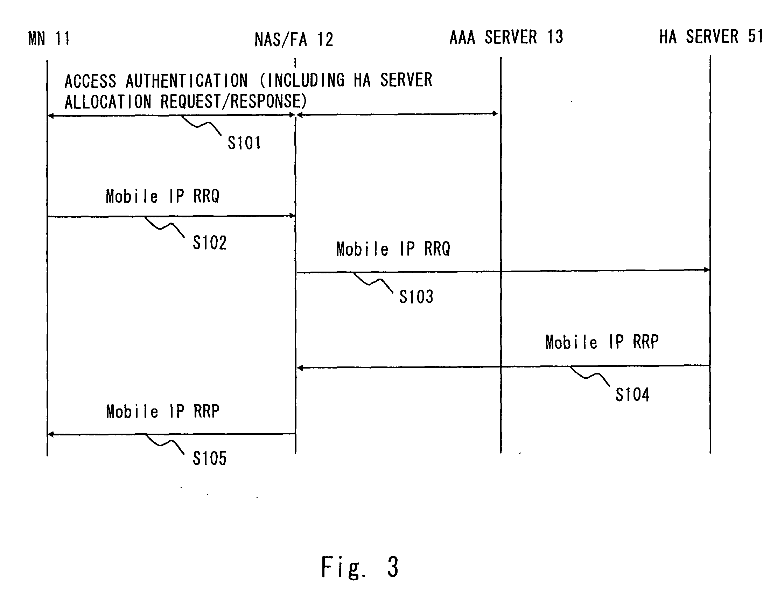

Referring now to Fig. 3, the operation processing by the load distribution system according to the first embodiment will be described. Fig. 3 is a sequence diagram showing an operation sequence of the load distribution system according to the first embodiment. In the load distribution system according to the first embodiment, the AAA server 13 performs the allocation processing of the HA server 90 in consideration of the load distribution to the MN 11 when the AAA server 13 authenticates the access of the MN 11, so as to reduce the delay time in signaling processing.

First, the access authentication processing is executed between the MN 11 and the AAA server 13 through the NAS 12a (S101). The AAA server 13 executes the selection processing of the HA server 90 which is to be allocated to the MN 11 based on the user characteristic of the MN 11 and the load condition of each of the HA servers (51 to 53) upon receiving the access authentication processing request.

Now, the selection processing of the HA server 90 by the AAA server 13 in the access authentication processing will be described further in detail. First, the MN 11 transmits an HA server allocation request message to the NAS/FA 12. Upon receiving the HA server allocation request message from the MN 11, the NAS/FA 12 transfers the HA server allocation request message to the AAA server 13. Upon receiving the HA server allocation request message, as will be described later, the AAA server 13 selects the HA server 90 that is appropriate for usage with the HA server selection mechanism. The AAA server 13 generates an HA server allocation response message after selecting the HA server 51, for example, and stores the IP address information of the HA server 51 which is selected in the HA server allocation response message that is generated to transmit it to the NAS/FA 12. Upon reception of the HA server allocation response message from the AAA server 13, the NAS/FA 12 transfers the HA server allocation response message to the MN 11. The MN 11 acquires the IP address of the HA server 51 included in the HA server allocation response message when the MN 11 receives the HA server allocation response message. Thereafter, the MN 11 uses the HA server that is designated by the HA server allocation response message. Note that the transmission and reception of the HA server allocation request message and the HA server allocation response message may be performed using a sequence of the access authentication processing that has been used in the current Mobile IP system.

Upon completion of the access authentication processing, the signaling processing is executed (S102, 103, 104, 105). As the signaling processing by the load distribution system 1 according to the first embodiment is similar to that in the existing Mobile IP system, the description of the signaling processing will be omitted.

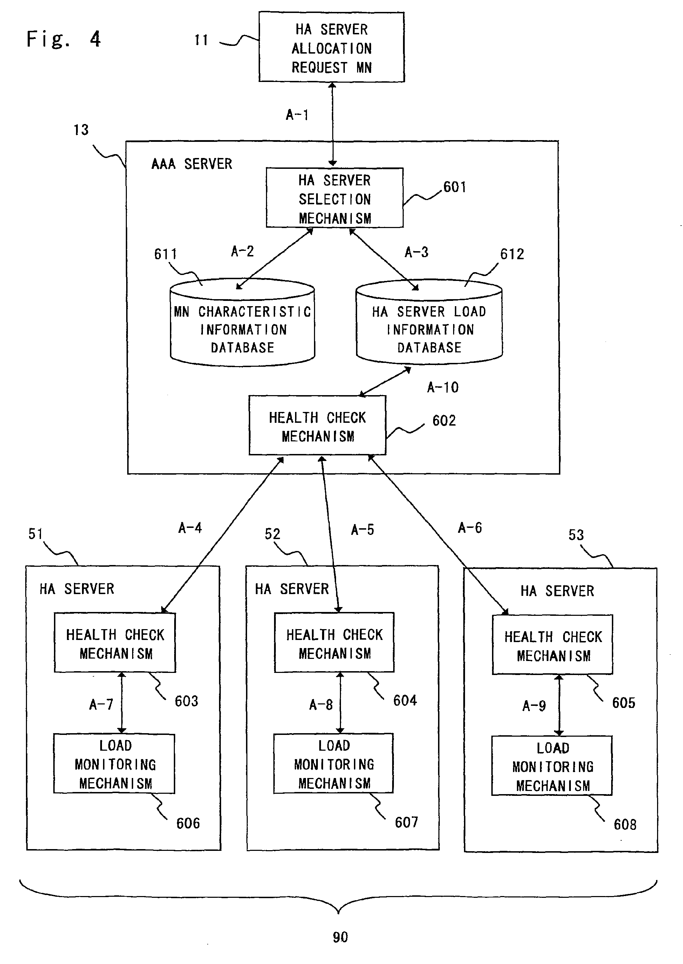

Referring next to Figs. 4 to 7, the processing of selecting the HA server which is appropriate for the usage using the HA server selection mechanism of the AAA server 13 will be described in detail. Fig. 4 is a system configuration diagram showing one example of the load distribution system 1 according to the first embodiment.

The AAA server 13 includes an MN characteristic information database 611 where the user characteristic of the MN 11 is stored, an HA server load information database 612 where the load condition of each of the HA servers (51 to 53) is stored, an HA server selection mechanism 601 that performs the selection processing of the HA server 90 allocated to the MN 11, and a health check mechanism 602 that functions as health check means that acquires load conditions of the plurality of HA servers 90 (51 to 53).

The HA servers (51 to 53) include health check mechanisms (603 to 605), respectively, as self health check means that acquire the load condition of itself, and load monitoring mechanisms (606 to 608), respectively, as load monitor means that monitor the load condition of itself.

Upon receiving load condition acquiring request from the AAA server 13, each of the health check mechanisms (603 to 605) of each of the HA servers (51 to 53) acquires the load condition of itself monitored by the load monitoring mechanisms (606 to 608) to transmit the load condition back to the AAA server 13. The health check mechanism 602 of the AAA updates the load condition of each of the HA servers (51 to 53) stored in the HA server load information database 611 based on the load condition of each of the HA servers (51 to 53) acquired from each of the HA servers (51 to 53).

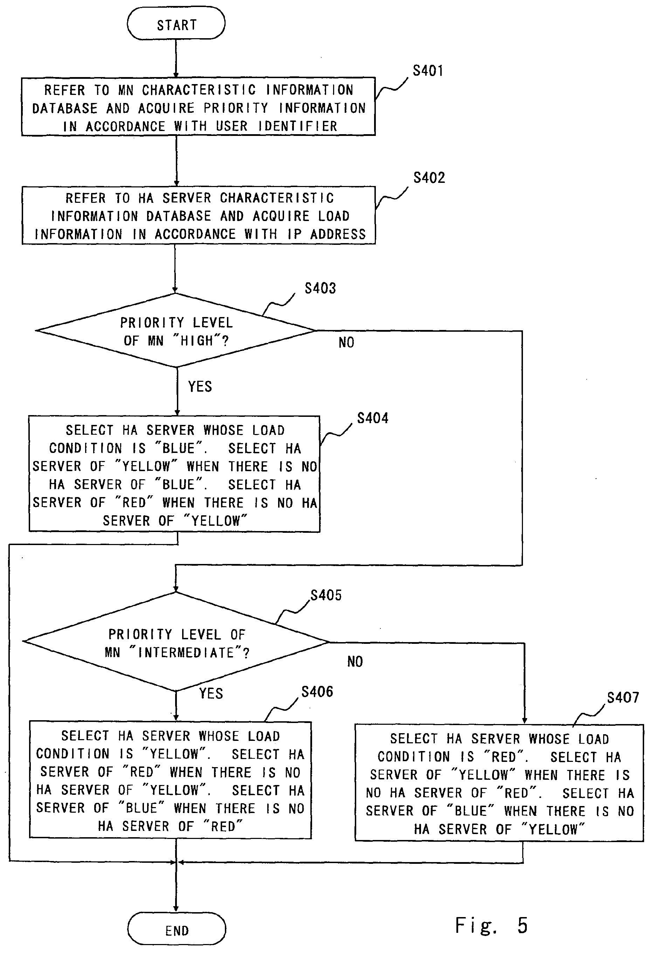

Fig. 5 is a flow chart showing one example of processing in which the HA server selection mechanism of the AAA server selects the HA server. Hereinafter, the selection processing of the HA server will be described with reference to Figs. 4 to 7.

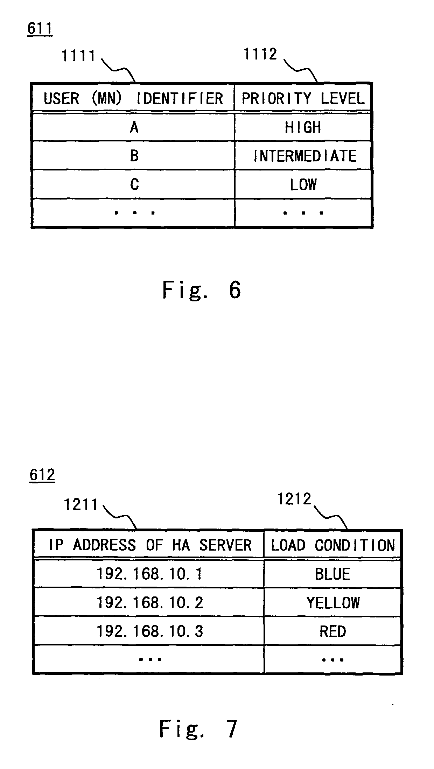

First, upon receiving the HA server allocation request (A-1), the HA server selection mechanism 601 of the AAA server 13 refers to the MN characteristic information database 611 shown in Fig. 6 (A-2) to acquire the MN characteristic information (S401).

In the MN characteristic information database 611 shown in Fig. 6, the characteristic information that corresponds to the user identifier of the MN 11 is registered in advance. In the example shown in Fig. 6, the priority level (QoS) 1112 of the allocation classified into three categories (high, intermediate, low) is made correspondent to the user identifiers 1111 of the MN 11. Although the priority level of the MN 11 in Fig. 6 is classified into three categories of high, intermediate, and low as an example, this is not limited to this example but the user identifier and the characteristic information may be made correspondent by another classification method.

Next, the HA server selection mechanism 601 refers to the HA server load information database 612 shown in Fig. 7 (A-3) and acquires the HA server load information (S402). In the HA server load information database 612 shown in Fig. 7, each of the load conditions 1212 of the HA servers (51 to 53) classified into three categories (blue, red, yellow) is made correspondent to the IP address 1211 of each of the HA servers (51 to 53). Now, the load condition may be categorized in view of a load ratio of a CPU, a utilization ratio of a memory, free space of a disk or the like. Although the load condition of the HA server 90 in Fig. 7 is classified into three categories of blue, red, and yellow as an example, this is not limited to this example but the load condition may be made correspondent by another classification method.

As the load condition of the HA server 90 constantly changes, it is preferable that the HA server load information database 612 included in the AAA server 13 constantly reflects the latest situation. Accordingly, the health check mechanism 602 included in the AAA server 13 transmits state information request messages (A-4, A-5, A-6) to the health check mechanisms (603 to 605) of the HA servers (51 to 53) at regular time intervals. Each of the health check mechanisms (603 to 605) of each of the HA servers (51 to 53) acquires, upon receiving the state information request message transmitted from the AAA server 13, the own state information from the load monitoring mechanisms (606 to 608) (A-7, A-8, A-9), and transmits the acquired state information to the health check mechanism 602 of the AAA server 13 by state information notification messages (A-4, A-5, A-6). Upon receiving the state information from the health check mechanisms included in the HA server 12, the health check mechanism 602 of the AAA server 13 updates the HA server load information database 612 shown in Fig. 7 (A-10).

Although the update processing of the HA server load information database 612 of the AAA server 13 is started in accordance with the update request by the health check mechanism 602 of the AAA server 13 in the first embodiment, it is not limited to this example but the update processing of the HA server load information database 612 of the AAA server 13 may be started at regular time intervals or when the load condition exceeds a predetermined value by the load monitoring mechanisms (606 to 608) or each of the health check mechanisms (603 to 605) of each of the HA servers (51 to 53). Now, the state information request message and the state information response message that are used in the update processing of the HA server load information database 612 may be based on a protocol such as RADIUS or DIAMETER which have been standardized by the IETF (Internet Engineering Task Force).

Next, the HA server selection mechanism 601 selects the HA server 90 which is appropriate for the usage based on the MN characteristic information and the HA server load information that are acquired (S403, 404, 405, 406, 407). More specifically, the HA server selection mechanism 601 firstly refers to the MN characteristic information database 611 to judge whether the priority level of the MN 11 is "high" (S403). When the priority level is not "high" (which means the priority level is "intermediate" or "low"), the process goes to S405.

On the other hand, when the priority level is "high", the HA server selection mechanism 601 refers to the HA server load information database 612 and selects the HA server 90 in accordance with the load condition of each of the HA servers (51 to 53) (S404). In summary, when there exists the HA server 90 whose load condition is "blue", the HA server 90 whose load condition is "blue" is selected. When there exists no HA server 90 whose load condition is "blue" and there exists the HA server 90 whose load condition is "yellow", the HA server 90 whose load condition is "yellow" is selected. When there exists no HA server 90 whose load condition is either "blue" or "yellow" and there exists the HA server 90 whose load condition is "red", the HA server 90 whose load condition is "red" is selected.

Next, the HA server selection mechanism 601 judges whether the priority level of the MN 11 is "intermediate" or not (S405). When the priority level is not "intermediate" (which means when the priority level is "low"), the process goes to S407.

On the other hand, when the priority level is "intermediate", the HA server selection mechanism 601 refers to the HA server load information database 612 and selects the HA server 90 in accordance with the load condition of each of the HA servers (51 to 53) (S406). In summary, when there exists the HA server 90 whose load condition is "yellow", the HA server 90 whose load condition is "yellow" is selected. When there exists no HA server 90 whose load condition is "yellow" and there exists the HA server 90 whose load condition is "red", the HA server 90 whose load condition is "red" is selected. When there exists no HA server 90 whose load condition is either "yellow" or "red" and there exists the HA server 90 whose load condition is "blue", the HA server 90 whose load condition is "blue" is selected.

When the priority level is "low", the HA server selection mechanism 601 refers to the HA server load information database 612 and selects the HA server 90 in accordance with the load condition of each of the HA servers (51 to 53) (S407). In summary, when there exists the HA server 90 whose load condition is "red", the HA server 90 whose load condition is "red" is selected. When there exists no HA server 90 whose load condition is "red" and there exists the HA server 90 whose load condition is "yellow", the HA server 90 whose load condition is "yellow" is selected. When there exists no HA server 90 whose load condition is either "red" or "yellow" and there exists the HA server 90 whose load information is "blue", the HA server 90 whose load condition is "blue" is selected.

As discussed above, in the load distribution system 1 according to the first embodiment, the AAA server 13 that includes the MN characteristic information database 611 and the HA server load information database 612 executes the selection processing of the HA server 90 in accordance with the load information of the HA server 90 and the user characteristic information of the MN 11. Then, the exchange of the message regarding the allocation processing of the HA server 90 in consideration of the load distribution is performed using a sequence that is in the access authentication processing of the existing Mobile IP system without using the load balancer.

As stated above, as the AAA server 13 includes the HA server load information database 612 and allocates the HA server 90 in consideration of the load condition in performing the access authentication, redirect processing is not performed. Accordingly, there occurs no delay time in the signaling processing, and the load distribution processing may be effectively realized.

Further, as the AAA server 13 performs the selection processing of the HA server 90, there is no need to introduce the load balancer, and it is possible to reduce cost of the device or cost of maintenance and management of the load balancer. Further, as the load balancer is not used, there occurs no delay time due to the transfer processing and the proxy reception of the RRQ message performed by the load balancer, whereby it is possible to effectively realize the load distribution processing.

Furthermore, the AAA server 13 includes the MN characteristic information database 611 and the HA server load information database 612, and allocates the HA server 90 to the MN 11 that requests allocation of the HA server 90 in consideration of not only the load condition of the HA server 90 but also the characteristic of the MN 11, whereby it is possible to prevent a plurality of MNs 11 that may perform large volume of data communication from being allocated to the same HA server 90. Accordingly, degradation of the communication performance of the MN 11 contained in the HA server 90 can be prevented.

### Another exemplary embodiment

Although the server that is allocated to the MN 11 is the HA server 90 that manages the location information of the MN 11 in the above-described embodiment, the present invention is not limited to this embodiment. The load distribution system and the load distribution method according to the present invention may be applied not only to the HA server 90 but also to any server that is allocated to the MN 11 in performing the access authentication. In short, the load distribution system and the load distribution method according to the present invention may be applied to a DHCP (Dynamic Host Configuration Protocol) server or a DNS (Domain Name System) server, for example.

Further, although description has been made in the above embodiment of the configuration and the operation on the basis of the CMIP (Client Mobile IP) where the MN 11 itself executes the processing of the Mobile IP, the present invention is not limited to this example. In summary, the load distribution system and the load distribution method according to the present invention may also be applied to the embodiment based on the PMIP (Proxy Mobile IP) without executing the processing of the Mobile IP by the MN 11 itself. Note that, in the PMIP (Proxy Mobile IP), a base station which is in the higher order of the MN 11 or a gateway such as the NAS/FA 12 perform the processing of the Mobile IP executed in the MN 11 by proxy.

Furthermore, the information which is agreed in advance between a user of the MN 11 that uses the Mobile IP system and a provider that provides the Mobile IP system at the time of contract or the information such as the communication history of the MN 11 may be used as the MN characteristic information stored in the MN characteristic information database 611. In this case, the MN characteristic information may be treated as the information that is agreed in advance. Accordingly, as the MN characteristic information is the static information, it can be registered in the MN characteristic information database 611 in advance. Thus, the mechanism for updating the MN characteristic information database 611 is not necessary.

Although the present invention has been described with reference to the exemplary embodiments, the present invention is not limited to the above embodiments. The configuration and the detail of the present invention may be changed in various ways, as will be understood by a person skilled in the art, within the scope of the present invention.

This application claims the benefit of priority, and incorporates herein by reference in its entirety, the following Japanese Patent Application No. 2008-068787 filed on March 18, 2008.

### Industrial Applicability

The present invention may be broadly applied as a load distribution system and a load distribution method.

## Claims

1. A load distribution system in a communication network that comprises a mobile node, a plurality of servers that are connected to the mobile node, and an authentication server that performs access authentication of the mobile node, wherein
the authentication server comprises a characteristic information database where user characteristic of the mobile node is stored and a load information database where a load condition of each of the servers is stored, and the authentication server selects one of the servers that is allocated to the mobile node based on the user characteristic of the mobile node and the load condition of each of the servers upon receiving an access authentication request of the mobile node.

2. The load distribution system according to Claim 1, wherein
the authentication server further comprises health check means that acquires load conditions of the plurality of servers, and
the authentication server updates the load condition of each of the servers stored in the load information database based on the load condition of each of the servers acquired by the health check means.

3. The load distribution system according to Claim 2, wherein
each of the servers comprises self health check means that acquires the load condition of itself and load monitor means that monitors the load condition of itself, and
the self health check means acquires the load condition of itself that is monitored by the load monitor means and transmits the load condition back to the authentication server upon receiving a load condition acquiring request from the authentication server.

4. The load distribution system according to Claim 1, wherein the server that is connected to the mobile node is a home agent server that manages location information of the mobile node.

5. The load distribution system according to any one of Claims 1 to 4, wherein the communication network is a communication network using a mobile IP.

6. A load distribution method, wherein an authentication server selects an allocation server that is allocated to a mobile node based on user characteristic of the mobile node and a load condition of the allocating server upon receiving an access authentication request of the mobile node.

7. The load distribution method according to Claim 6, comprising acquiring the load condition of the allocating server and updating the load condition of the allocating server stored in a load information database based on the load condition of the allocating server that is acquired.

8. The load distribution method according to Claim 7, comprising monitoring the load condition of the allocating server, and upon receiving an acquiring request of the load condition to the allocating server from the authentication server, acquiring the load condition of the allocating server that is monitored to transmit the load condition back to the authentication server.

9. The load distribution method according to Claim 6, wherein the allocating server is a home agent server that manages location information of the mobile node.

10. The load distribution method according to any one of Claims 6 to 9, wherein a communication network that comprises the mobile node, the allocating server, and the authentication server is a communication network that uses a mobile IP.

11. An authentication server that comprises a characteristic information database in which user characteristic of a mobile node is stored, and a load information database in which a load condition of each of servers connected to the mobile node is stored, the authentication server selecting a server that is allocated to the mobile node based on the user characteristic of the mobile node and the load condition of each of the servers upon receiving an access authentication request of the mobile node.

12. The authentication server according to Claim 11, further comprising health check means that acquires the load condition of each of the servers, wherein
the authentication server updates the load condition of each of the servers stored in the load information database based on the load condition of each of the servers acquired by the health check means.

13. The authentication server according to Claim 12, wherein
each of the servers comprises self health check means that acquires the load condition of itself and load monitor means that monitors the load condition of itself, and
the self health check means acquires the load condition of itself that is monitored by the load monitor means and transmits the load condition back to the authentication server upon receiving a load condition acquiring request from the authentication server.

14. The authentication server according to Claim 11, wherein the server that is connected to the mobile node is a home agent server that manages location information of the mobile node.

15. The authentication server according to any one of Claims 11 to 14, wherein a communication network that comprises the mobile node, each of the servers, and the authentication server is a communication network that uses a mobile IP.
